# EUROPEAN PATENT SPECIFICATION

(11) **EP 0 466 519 B1**
(45) Date of publication and mention of the grant of the patent: **28.06.1995**
(21) Application number: 91306397.0
(22) Date of filing: 15.07.1991
(51) Int. Cl.: A21C 5/00

(54) **Method for continuously dividing dough**
Verfahren zum kontinuierlichen Zerteilen von Teig
Procédé pour diviser la pâte en continu

(30) Priority: 13.07.1990 JP 186766/90
(43) Date of publication of application: 15.01.1992
(73) Proprietor: RHEON AUTOMATIC MACHINERY CO. LTD., Utsunomiya-shi Tochigi-ken (JP)
(72) Inventor: Morikawa, Michio, Utsunomiya-shi, Tochigi-ken (JP); Hirabayashi, Koichi, Utsunomiya-shi, Tochigi-ken (JP); Hayashi, Torahiko, Utsunomiya-shi, Tochigi-ken (JP)
(74) Representative: Leale, Robin George

(56) References cited:
- EP-A- 0 257 717
- EP-A- 0 285 442
- EP-A- 0 415 714
- DE-A- 3 727 596
- FR-A- 2 477 378
- GB-A- 268 618

## Description

This invention relates to a method and apparatus for dividing dough, and more particularly, for continuously dividing bread dough into portions of substantially equal weight.

In a conventional bread production process, materials are mixed and kneaded in a mixer to prepare a mass of dough, the dough is then divided by a divider into small pieces having a preset weight, and is then subjected to the respective molding processes. In this dividing process, a small part of the dough is sucked into a cylinder by means of a piston of the divider, to measure its volume. This dividing process complicates the subsequent processes, in that the gel structure of the dough can be destroyed by the mechanical stresses exerted on it by the movements of the piston or the like. To avoid this, an oxidizing agent such as potassium bromate has to be mixed in advance into the dough, and a resting step is needed after the dividing process, to rest the divided dough for a certain period.

Further, this known method, in which the volume of the dough is measured by means of a measuring cylinder, is not suitable for dividing bread dough into portions of a constant weight. This is because the specific gravity of the dough is always changing due to the generation of gases in it. Thus problems caused by variations in the measurements of the weight of the dough have remained.

EP-A-0285442 discloses a method of continuously dividing dough by means of an apparatus which includes a dough hopper, a dough divider for dividing the dough by opening and closing an outlet provided at the bottom of the hopper, and a weighing means beneath the said outlet for weighing the dough to be divided as it falls from the hopper, the method including measuring the weight B of a divided portion of dough by means of said weighing means after the dough has been divided. However, in this method the data obtained by weighing the divided portion of dough is used only to adjust the timing of depositing the said portion onto a conveyor, not to adjust the weight of a subsequent portion.

Viewed from one aspect the present invention is characterised by obtaining the the ratio A/B where A is the standard weight of a portion of dough to be divided and, based on the said ratio, each time determining the length of the next period of outlet opening.

EP-A-0285442 also discloses a method of continuously dividing dough by means of apparatus which includes a dough hopper, a dough divider having cutting knives for dividing the dough by opening and closing an outlet provided at the bottom of the hopper, and a weighing stand located beneath the said knives for weighing the dough as it falls from the hopper, the method comprising receiving the dough discharged through the outlet on the weighing stand. However, the data obtained by weighing the dough is not used to control the operation of the said divider.

Viewed from another aspect the present invention is characterised by measuring the weight of the dough by means of the said weighing stand before it is divided, and controlling the knives in dependence on the weight so measured so that a divided portion of dough of the same weight as the preceding portion is obtained, and further comprising moving the said weighing stand downwardly and rearwardly, as seen in the direction of advancement of a conveyor located beneath the weighing stand, during the dividing operation and, after the dough has been weighed, transferring the dough from the weighing stand to the said conveyor.

DE-A-3727596 discloses a method of dividing dough into portions as it is fed from a hopper and adjusting the weight of said portions by reference to the weight of previous portions, but does this by first passing the dough through a mechanically complicated roller mechanism at the hopper exit to make it of substantially constant transverse cross-section, then weighing the dough before dividing it at a location spaced laterally from the hopper exit, then weighing the divided portions again and using the last-mentioned weight data to adjust the timing of operation of the dividing means. The methods and apparatus of the present invention dispense with the roller mechanism and one of the two weighing steps of this prior art, and thus provide a major simplification over the same, by weighing the dough as it falls from the hopper and dividing it at that same location.

It is a particular advantage of preferred forms of the invention that damage to the gel structure of the dough is reduced in that the downward movement of the dough, assisted by the vertical conveyors, takes place without friction between the dough and the hopper side walls, in that the conveyors are always operated or intermittently operated when the outlet is open. The fact that at any level in the hopper an equal or approximately equal horizontal cross-sectional area of space is provided, defined by the facing side walls, serves to reduce the generation of shearing stresses in the dough when it passes down through the hopper. Thus, throughout the feeding and dividing process, the apparatus enables a mass of dough free of damage to the gel structure to be freely discharged through the outlet, while a uniform weight of the discharged mass of dough at any section thereof may always be maintained by instantly compensating for any variation in volume at the time of discharge.

An embodiment of the invention will now be described by way of example and with reference to the accompanying drawings, in which:-
Fig. 1 is a schematic cross-sectional side view showing an embodiment of this invention; and
Figs. 2, 3 and 4 are schematic and partial side views, showing successive steps in the operation of the embodiment of Fig. 1.

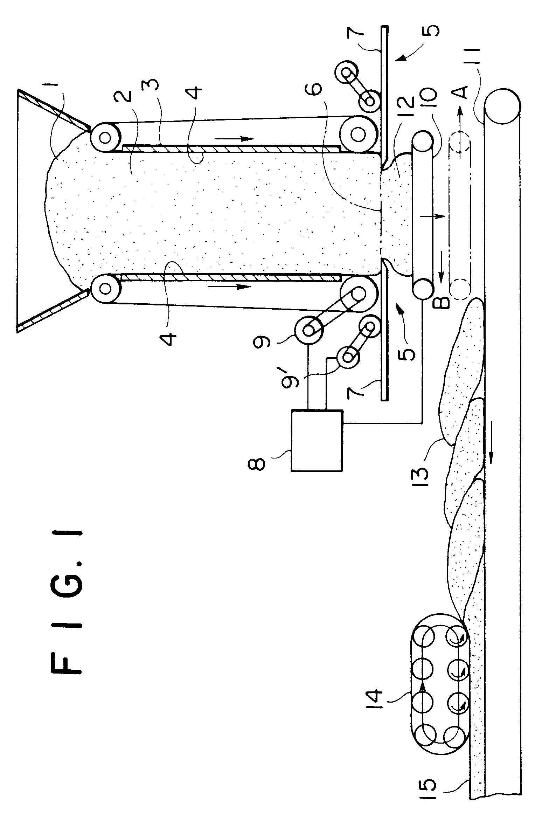

Referring to Fig. 1, a hopper 2 for dough 1 comprises an upwardly enlarged open top section for receiving the dough, and a main body section having surrounding side walls 3. The horizontal cross-sectional area of the space surrounded by the walls 3 inside of the hopper is kept constant at all levels.

Vertical conveyors 4 are mounted on two of the side walls 3, facing each other. It is also possible, and even preferable, to mount vertical conveyors 4 on all of the side walls surrounding the interior of the hopper. Each vertical conveyor includes a driven roller at the bottom and a freely rotatable roller at the top. The driven roller is driven by a motor 9, connected to the roller by conventional means. The rollers support a conveyor belt which passes around them, the flight of the conveyor belt facing the inside of the hopper being supported by a support plate. The vertical conveyors move the dough 1 in the hopper down to an outlet 6, without generating any friction between the hopper walls 3 and the dough.

A divider 5, provided with cutting knives 7, is located at the outlet 6 of the hopper, beneath the vertical conveyors 4, so as to divide, by sliding movements of the knives 7, the dough 12 discharged through the outlet. The knives 7 are caused to move towards and away from each other by means of a motor 9', the output of which is connected to the knives by conventional means.

Thus the hopper outlet 6 is opened and closed by the sliding movements of the knives 7 of the divider 5. When the knives 7 are in their abutting position, the outlet 6 is closed.

A weighing and discharging conveyor 10, for measuring the weight of the dough and discharging it, is provided beneath the divider 5. The conveyor 10 comprises a conveyor belt passing around two horizontal rollers spaced apart from each other, one of which rollers is driven. In the weighing operation the weight of the dough is calculated by measuring the total weight of the conveyor carrying the dough, as sensed by a weighing device such as a load cell mounted on a base (not shown) that supports the conveyor 10, and then subtracting the net weight of the conveyor from such measurement. The conveyor 10 is supported by a frame (not shown) so as to be movable in both the vertical and horizontal directions.

The values of the thus calculated weight of the dough are fed to a control means 8 and stored therein. The control means 8 adjusts, by means of motors 9 and 9', the operation of the vertical conveyors 4 and the period for which the knives 7 of the divider 5 are separated, i.e. the period of opening of the outlet 6, respectively. The control means 8 also adjusts the operation of the weighing and discharging conveyor 10 so that the timing for the conveyor 10 to be moved up and down, or rearwardly or forwardly, is appropriately determined. For the purposes of the above-mentioned control the weighing and discharging conveyor 10 can be operated by any conventional means.

A transfer conveyor 11 is provided under the weighing and discharging conveyor 10 for conveying the dough received from the conveyor 10. Fig. 1 shows only a part of the conveyor 11, which has one end positioned under the conveyor 10. The transfer conveyor comprises a conveyor belt passing around two rollers, one of which is driven.

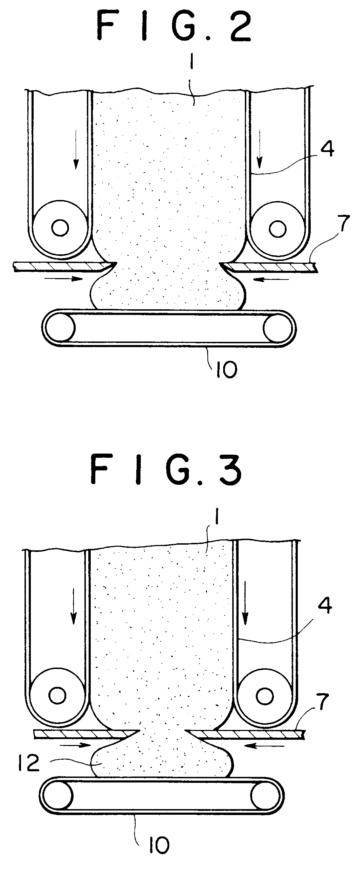

The operation of the apparatus will now be explained, by referring also to Figs. 2, 3 and 4. The hopper 2 is filled with dough 1, with the knives 7 closed. In this state, when the knives 7 are separated, the outlet 6 is thereby opened, and the dough is discharged through the outlet onto the weighing and discharging conveyor 10. Since the dough is supported by the conveyor 10 during such discharge, the dough accumulates on the conveyor 10 without being accelerated.

When a preset amount of dough has accumulated, the knives 7 are closed by a command from the control means 8. The dividing operation is helped by the simultaneous downward movement of the weighing and discharging conveyor 10.

The weighing operation starts when the dough begins to be discharged onto the weighing and discharging conveyor 10, and continues until the dough is cut. The measurements are continuously recorded throughout the weighing operation.

The information containing the weight of the dough and the period during which the outlet was open is fed to the control means 8 and is used to determine the length of the next period of outlet opening.

The period of outlet opening is determined in the control means 8 as follows: first the standard weight A of a piece of dough to be divided is preset, and the period D needed to obtain this standard weight is calculated according to the following equation:

$\text{A/D = B/C}$

where B is the weight of a piece of dough measured after the dough has been divided, and C is the period of outlet opening which was required to discharge the dough of weight B. Thus, an appropriate period of outlet opening is always calculated in line with the changing dough-processing conditions.

This calculation of the length of the period of outlet opening is advantageous in that by so doing inaccurate measurements due to unstable flow of the dough caused by the rheological properties of the dough in the hopper, unpredictable changes in the specific gravity of the dough due to gas generated in the dough, or changes in the pressure at the outlet or resistance to a smooth downward flow due to an increase or decrease in the height of dough in the hopper, can all be avoided.

In another method of dividing the dough, the dough is divided without recourse to the calculated values according to the above equation. In this direct method, the dough is divided immediately after the dough accumulating on the weighing and discharging conveyor 10 has attained the desired weight.

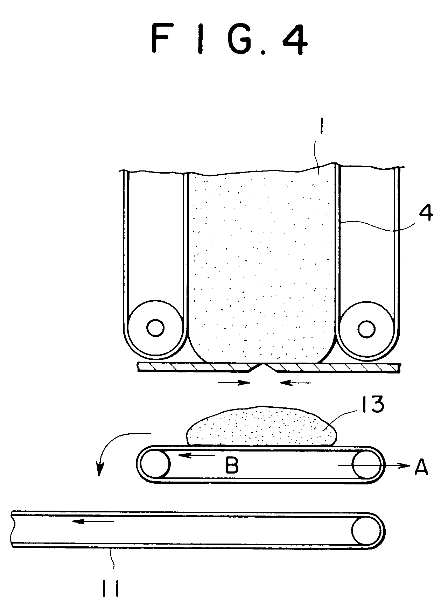

A divided portion of dough 13 of a desired weight is thus deposited on the weighing and discharging conveyor 10. Then the whole conveyor 10 is moved in the direction indicated by arrow A in Fig. 4, and the belt of conveyor 10 is driven in the direction indicated by arrow B. These movements are controlled by the control means 8 so that at a preset position on the transfer conveyor 11 the tip of the divided portion of dough overlaps the preceding portion. The transferred portions of dough arranged in this manner on the transfer conveyor 11 are stretched by means of any suitable stretcher 14. Thus a continuous belt-like sheet of portions of dough, with every portion of a uniform weight, can be produced, and this continuous sheet can then be cut into preset dimensions for treatment in a subsequent molding process.

It will thus be understood that, by providing the divider, the weighing and discharging conveyor, and the transfer conveyor, which are all instantly and successively controllable through the control means, the method and apparatus of this embodiment is adaptable to ever-changing dough-processing conditions, to continuously divide bread dough so as to produce dough portions of a uniform weight. When transferring them to a subsequent processing station a high-quality belt-like sheet of dough, made up of portions of a uniform weight, is obtained. This is accomplished without the need for extra chemical agents and processes that were inevitable with the prior art methods, while the gel structure of the dough is kept undamaged.

It will be thus be seen that the present invention, at least in its preferred forms, provides an improved dough dividing method and apparatus for producing a sheet of dough without damaging the gel structure of the dough; and furthermore provides a method and apparatus for continuously dividing bread dough by means of an improved dough divider; and furthermore provides a method and apparatus for continuously dividing bread dough so as to produce a sheet of dough portions with every portion of uniform weight.

## Claims

1. A method of continuously dividing dough by means of an apparatus which includes a dough hopper (2), a dough divider (5) for dividing the dough by opening and closing an outlet (6) provided at the bottom of the hopper, and a weighing means (10) beneath the said outlet for weighing the dough to be divided as it falls from the hopper, the method including measuring the weight B of a divided portion of dough by means of said weighing means after the dough has been divided, characterised by obtaining the ratio A/B where A is the standard weight of a portion of dough to be divided and, based on the said ratio, each time determining the length of the next period of outlet opening.

2. A method as claimed in claim 1, wherein a period (D) of outlet opening which is appropriate to discharge a dough portion of the standard weight (A) is each time successively calculated, on the basis of the preceding data, according to the following equation:
$\text{B/C = A/D}$
where C is the period of outlet opening which resulted in discharge of a dough portion of weight B.

3. A method of continuously dividing dough by means of apparatus which includes a dough hopper (2), a dough divider (5) having cutting knives (7) for dividing the dough by opening and closing an outlet (6) provided at the bottom of the hopper, and a weighing stand (10) located beneath the said knives for weighing the dough as it falls from the hopper, the method comprising receiving the dough discharged through the outlet on the weighing stand, characterized by measuring the weight of the dough by means of the said weighing stand before it is divided, and controlling the knives in dependence on the weight so measured so that a divided portion of dough of the same weight as the preceding portion is obtained, and further comprising moving the said weighing stand downwardly and rearwardly, as seen in the direction of advancement of a conveyor (11) located beneath the weighing stand, during the dividing operation and, after the dough has been weighed, transferring the dough from the weighing stand to the said conveyor.

4. A method as claimed in any of the preceding claims, wherein the divided portions of dough (13) are deposited on a conveyor (11), located beneath the weighing means (10), at intervals proportional to their respective weights, and then stretched to form a continuous belt-like sheet of dough, any section of which has a uniform weight.

## Patentansprüche

1. Verfahren zum kontinuierlichen Teilen von Teig mittels einer Vorrichtung, die einen Teigtrichter (2), einen Teigteiler (5) zum Teilen des Teigs mittels Öffnens und Schließens eines Auslasses (6), der am Unterende des Trichters vorgesehen ist, und eine Wiegeeinrichtung (10) unter dem Teigauslaß umfaßt zum Wiegen des zu teilenden Teigs, wenn er aus dem Trichter fällt, wobei das Verfahren das Messen des Gewichtes B eines geteilten Teils des Teigs mittels der Wiegeeinrichtung umfaßt, nachdem der Teig geteilt worden ist, dadurch gekennzeichnet, daß das Verhältnis A/B erhalten wird, wobei A das Standardgewicht eines Teils von zu teilendem Teig ist, und, auf der Basis des genannten Verhältnisses, jedesmal die Länge der nächsten Periode des Öffnens des Auslasses bestimmt wird.

2. Verfahren nach Anspruch 1, worin eine Periode (D) des Öffnens des Auslasses, die geeignet ist, einen Teigteil des Standardgewichts (A) abzugegeben, jedesmal nachfolgend berechnet wird auf der Basis der vorhergehenden Daten in Übereinstimmung mit der nachstehenden Gleichung:
$\text{B/C = A/D,}$
worin C die Periode des Öffnens des Auslasses ist, die sich bei der Abgabe eines Teigteils des Gewichtes B ergeben hat.

3. Verfahren zum kontinuierlichen Teilen von Teig mittels einer Vorrichtung, die einen Teigtrichter (2), einen Teigteiler (5), der Schneidmesser (7) hat zum Teilen des Teigs mittels Öffnens und Schließens eines Auslasses (6), der am Unterende des Trichters vorgesehen ist, und ein Wiegegestell (10) umfaßt, welches unter den Messern angeordnet ist zum Wiegen des Teigs, wenn er aus dem Trichter fällt, wobei das Verfahren das Aufnehmen des durch den Auslaß hindurch abgegebenen Teigs auf dem Wiegegestell umfaßt, dadurch gekennzeichnet, daß das Gewicht des Teigs mittels des Wiegegestells gemessen wird, bevor er geteilt wird, und die Messer in Abhängigkeit von dem auf diese Weise gemessenen Gewicht gesteuert werden derart, daß ein geteilter Teil des Teigs des gleichen Gewichts wie des vorhergehenden Teils erhalten wird, und weiterhin das Wiegegestell nach unten und nach hinten, gesehen in Richtung der Vorbewegung eines Förderers (11), der unter dem Wiegegestell angeordnet ist, während des Teilungsvorganges bewegt wird und nach dem Wiegen des Teigs der Teig von dem Wiegegestell auf den genannten Förderer überführt wird.

4. Verfahren nach irgendeinem der vorhergehenden Ansprüche, in welchem die geteilten Teile (13) des Teigs auf einem Förderer (11) in Intervallen proportional zu ihren betreffenden Gewichten angeordnet und dann gestreckt werden, um eine kontinuierliche bandartige Teigbahn zu bilden, wobei jeder Abschnitt von ihr gleichmäßiges Gewicht hat.

## Revendications

1. Procédé pour diviser en continu de la pâte au moyen d'un appareil qui comprend une trémie (2) à pâte, un diviseur (5) de pâte destiné à diviser la pâte en ouvrant et fermant une sortie (6) prévue au fond de la trémie, et un moyen (10) de pesage au-dessous de ladite sortie pour peser la pâte devant être divisée pendant qu'elle tombe de la trémie, le procédé comprenant une mesure du poids B d'une portion de pâte divisée à l'aide dudit moyen de pesage après que la pâte a été divisée, caractérisé par l'obtention du rapport A/B où A est le poids de référence d'une portion de pâte devant être divisée et, sur la base dudit rapport, chaque temps déterminant la longueur de la période suivante d'ouverture de la sortie.

2. Procédé selon la revendication 1, dans lequel une période (D) d'ouverture de la sortie, qui est appropriée pour décharger une portion de pâte du poids de référence A, est calculée à chaque fois, de façon successive, sur la base de la donnée précédente, conformément à l'équation suivante :
$\text{B/C = A/D}$
où C est la période d'ouverture de la sortie qui a abouti au déchargement d'une portion de pâte de poids B.

3. Procédé pour diviser en continu de la pâte au moyen d'un appareil qui comprend une trémie (2) à pâte, un diviseur (5) de pâte ayant des couteaux (7) de coupe destinés à diviser la pâte en ouvrant et fermant une sortie (6) prévue au fond de la trémie, et un banc (10) de pesage placé au-dessous desdits couteaux pour peser la pâte pendant qu'elle tombe de la trémie, le procédé comprenant la réception de la pâte déchargée à travers la sortie sur le banc de pesage, caractérisé par une mesure du poids de la pâte au moyen dudit banc de pesage avant qu'elle soit divisée, et une commande des couteaux en fonction du poids ainsi mesuré afin qu'une portion divisée de pâte, de même poids que la portion précédente, soit obtenue, et comprenant en outre le déplacement dudit banc de pesage vers le bas et vers l'arrière, tel que vu dans le sens d'avance d'un transporteur (11) placé au-dessous du banc de pesage, pendant l'opération de division et, après que la pâte a été pesée, le transfert de la pâte du banc de pesage audit transporteur.

4. Procédé selon l'une quelconque des revendications précédentes, dans lequel les portions divisées de pâte (13) sont déposées sur un transporteur (11), placé au-dessous du moyen (10) de pesage, à intervalles proportionnels à leurs poids respectifs, puis étirées pour former une feuille de pâte continue, analogue à une bande, dont tout tronçon possède un poids uniforme.
